# EUROPEAN PATENT APPLICATION

(11) **EP 3 107 182 A1**
(43) Date of publication of application: **21.12.2016**
(21) Application number: 15746454.6
(22) Date of filing: 05.02.2015
(51) Int. Cl.: H02J 7/02

(54) **VOLTAGE DIFFERENCE CORRECTION DEVICE, VOLTAGE DIFFERENCE CORRECTION METHOD**

(30) Priority: 07.02.2014 JP 2014022544
(71) Applicant: NEC Corporation, Tokyo 108-8001 (JP)
(72) Inventor: TATENO, Kozo, Tokyo 108-8001 (JP)
(74) Representative: Vossius & Partner Patentanwälte Rechtsanwälte mbB
(86) International application number: PCT/JP2015/000517
(87) International publication number: WO 2015/118872

(57) **Abstract**

The purpose of the present invention is to achieve low cost balance correction in a voltage difference correction device for a power storage system that is provided with a plurality of cells. A voltage difference correction device (1) according to the present invention is provided with: a determination unit (2) that selects a first correction unit (8) and/or a second correction unit (9) on the basis of the size of the voltage difference that is output by a voltage difference detection means (4) that detects at a prescribed time interval the voltage difference between a plurality of cells (21-24) that are provided to a power storage system; and a control unit (3) that drives the first correction unit (8) or the second correction unit (9) depending on which is selected by the determination unit (2) and reduces the voltage difference.

## Description

### Technical Field

The present invention relates to a technology for correcting a voltage difference of a plurality of cells constituting a power storage system.

### Background Art

A power storage system is used in all fields such as factories and office buildings. Furthermore, recently, a demand for home is also spreading. In order to further enhance the availability of a power storage system in respective fields, maintaining performance over a long time is an important problem.

In order to maintain the performance of the power storage system, it is necessary to correct a voltage difference among a plurality of cells constituting the power storage system. Hereinafter, this correction is called cell balance control or balance correction.

In general, a balance circuit corresponding to the number of battery connections is used for the cell balance control. The balance circuit is mounted on a module (also including a board-like module) which is called a Battery Management Unit (hereinafter, written as BMU) that controls a cell.

In order to correct a large voltage difference, a larger rated balance circuit is preferable. However, the larger rated balance circuit needs to have a mounting area larger than that of a smaller rated balance circuit. Therefore, a casing of a power storage system per one becomes larger. Furthermore, the manufacturing cost of the larger rated balance circuit becomes higher, resulting in an increase in the cost of the power storage system.

On the other hand, in the case of using the smaller rated balance circuit, since much time is required in order to correct a large voltage difference, the efficiency of voltage difference correction is low. That is, for the future, it is expected to provide a voltage difference correction device having low manufacturing cost and high efficiency.

Patent Literature 1 (hereinafter, written as PTL 1) discloses a technology for performing control for each single cell in such a manner that the larger a difference between a voltage of the single cell and a predetermined balance operation start voltage becomes, the more a current flowing through a current path connected in parallel with a single cell increases, when the voltage of the single cell has increased beyond the balance operation start voltage.

Patent Literature 2 (hereinafter, written as PTL 2) discloses that a cell balance circuit is externally mounted at a battery monitoring system.

### Citation List

### Patent Literature

PTL 1: Japanese Unexamined Patent Application Publication No. 2008-123868
PTL 2: Japanese Unexamined Patent Application Publication No. 2012-228002

### Summary of Invention

### Technical Problem

In PTL 1, the larger the difference between the voltage of the single cell and the balance operation start voltage becomes, the more the amount of the current flowing through the current path makes increase, and therefore time required for discharge is reduced. However, since only one type of balance circuit is used, larger rated devices are required in order to realize the method of PTL 1, and thus the power storage system is expensive in this case.

PTL 2 discloses that a switching element provided to an exterior of a protection circuit controls discharge, but does not disclose that the switching element is mounted in a board different from a board mounted with the protection circuit. Therefore, in the case of performing discharge by allowing a large current to flow, there is a case in which an increase in a board temperature is not avoided.

As described above, in the technologies disclosed in PTL 1 and PTL 2, it is not possible to realize balance correction with high efficiency at a low cost.

The technologies described in the Citation Lists have the above-described problems.

An object of the present invention is to provide a voltage difference correction device and a voltage difference correction method capable of solving the above-described problems, and a program therefor or a computer readable non-transitory storage medium stored with the program.

### Solution to Problem

A voltage difference correction device in one aspect of the present invention includes: a determination means for selecting at least one of a first correction means and a second correction means based on a magnitude of a voltage difference outputted by a voltage difference detection means that detects a voltage difference among a plurality of cells in a power storage system at a predetermined time interval; and
a control means for driving and controlling the first correction means or the second correction means selected by the determination means in such a manner that the voltage difference is reduced.

A voltage difference correction method in one aspect of the present invention includes: selecting, by a computer, at least one of a first correction unit and a second correction unit based on a magnitude of a voltage difference outputted by a voltage difference detection unit that detects a voltage difference among a plurality of cells provided in a power storage system at a predetermined time interval; and driving, by the computer, the selected first correction unit or second correction unit in such a manner that the voltage difference is reduced.

A voltage difference correction program in one aspect of the present invention causing a computer to execute:
a determination process of selecting at least one of a first correction means and a second correction means based on a magnitude of a voltage difference outputted by a voltage difference detection means that detects a voltage difference among a plurality of cells in a power storage system at a predetermined time interval; and
a control process of driving the first correction unit or the second correction unit selected by the determination unit in such a manner that the voltage difference is reduced.

The non-transitory computer readable medium in one aspect of the present invention stores the aforementioned voltage difference correction program.

### Advantageous Effects of Invention

The present invention has effects that it is possible to realize balance correction at a low cost.

### Brief Description of Drawings

[Fig. 1] Fig. 1 is a functional block diagram of a power storage system according to a first exemplary embodiment of the present invention.
[Fig. 2] Fig. 2 is a block diagram illustrating the arrangement of each element of a power storage system according to a first exemplary embodiment.
[Fig. 3] Fig. 3 is an explanation diagram illustrating wirings at the time of voltage difference correction of a first exemplary embodiment.
[Fig. 4] Fig. 4 is a flowchart illustrating the procedure of a first exemplary embodiment.
[Fig. 5] Fig. 5 is a diagram defining an operation mode of a first exemplary embodiment.
[Fig. 6] Fig. 6 is an explanation diagram illustrating wirings at the time of voltage difference correction of a second exemplary embodiment of the present invention.
[Fig. 7] Fig. 7 is an enlarged diagram of a switching terminal D of a second exemplary embodiment.
[Fig. 8] Fig. 8 is a diagram illustrating ΔV detection timings based on modes of a third exemplary embodiment of the present invention.
[Fig. 9] Fig. 9 is a diagram illustrating a time interval of ΔV detection of a third exemplary embodiment
[Fig. 10] Fig. 10 is a flowchart illustrating the procedure of a third exemplary embodiment.
[Fig. 11] Fig. 11 is a flowchart illustrating the procedure of a third exemplary embodiment subsequent to Fig. 10.
[Fig. 12] Fig. 12 is a diagram illustrating an influence applied to ΔV correction of discharge characteristics.
[Fig. 13] Fig. 13 is a flowchart illustrating the procedure of a fourth exemplary embodiment of the present invention.
[Fig. 14] Fig. 14 is a diagram defining an operation mode of a fourth exemplary embodiment.
[Fig. 15] Fig. 15 is a block diagram illustrating the arrangement of each element of a power storage system according to a fifth exemplary embodiment of the present invention.
[Fig. 16] Fig. 16 is a flowchart illustrating the procedure of a fifth exemplary embodiment.
[Fig. 17] Fig. 17 is a flowchart illustrating the procedure of a sixth exemplary embodiment of the present invention.
[Fig. 18] Fig. 18 is a block diagram of a voltage difference correction device according to a seventh exemplary embodiment of the present invention.
[Fig. 19] Fig. 19 is a block diagram exemplifying the configuration of an information processing apparatus capable of performing the present invention with a computer program.
[Fig. 20] Fig. 20 is a block diagram exemplifying the configuration of a storage medium stored with a computer program of the present invention. Description of Embodiments

### <First exemplary embodiment >

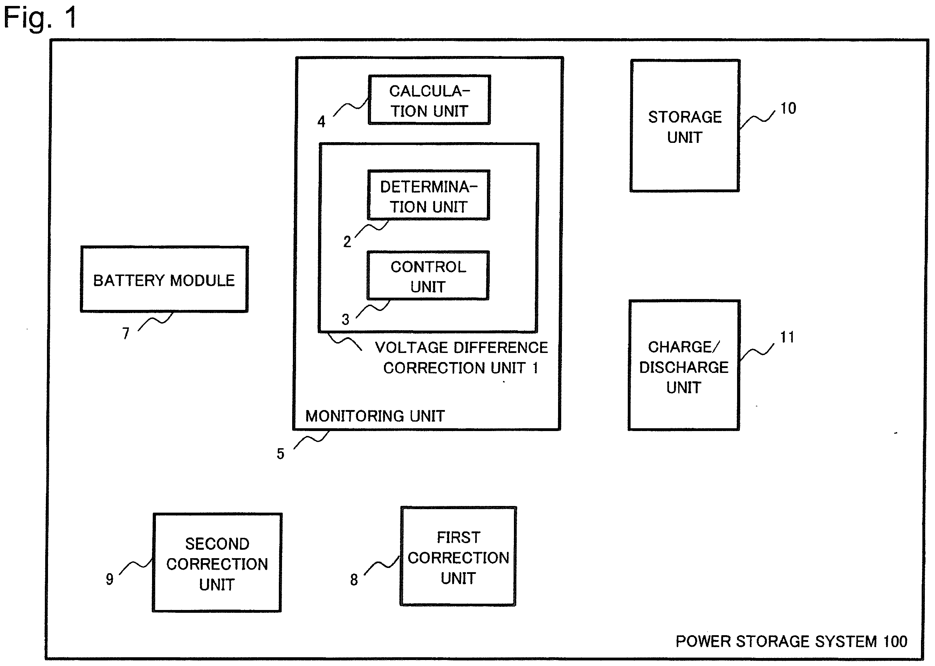

Fig. 1 is a block diagram illustrating functions according to a first exemplary embodiment of the present invention. A power storage system 100 includes a battery module 7, a monitoring unit 5, a first correction unit 8, a second correction unit 9, a storage unit 10, and a charge/discharge unit 11. In addition, in the case of simply calling a correction unit, it indicates both the first correction unit 8 and the second correction unit 9.

The monitoring unit 5 includes a calculation unit 4 and a voltage difference correction unit 1.

The voltage difference correction unit 1 includes a determination unit 2 and a control unit 3.

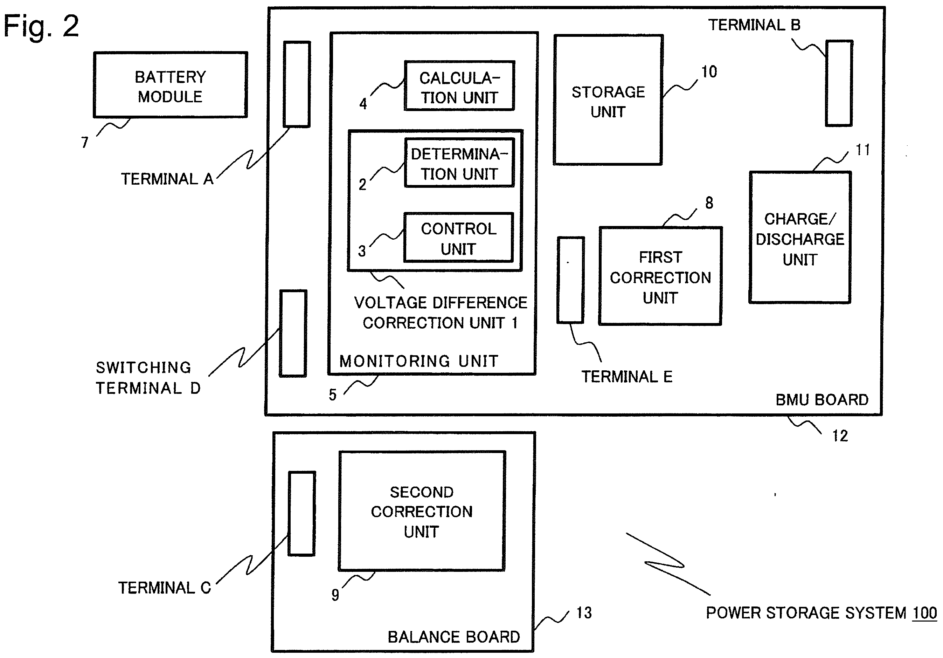

Fig. 2 is a diagram illustrating one example of a detailed arrangement of each element. The first correction unit 8 is arranged on a BMU board 12. The second correction unit 13 is arranged on a balance board 13 separately from the BMU board 12. A terminal B is a terminal for connecting the BMU board 12 to an external device such as a server for the Internet.

The battery module 7 has a configuration in which a plurality of cells (batteries) have been serially connected. The battery module 7 is electrically connected to the BMU board 12 via a terminal A.

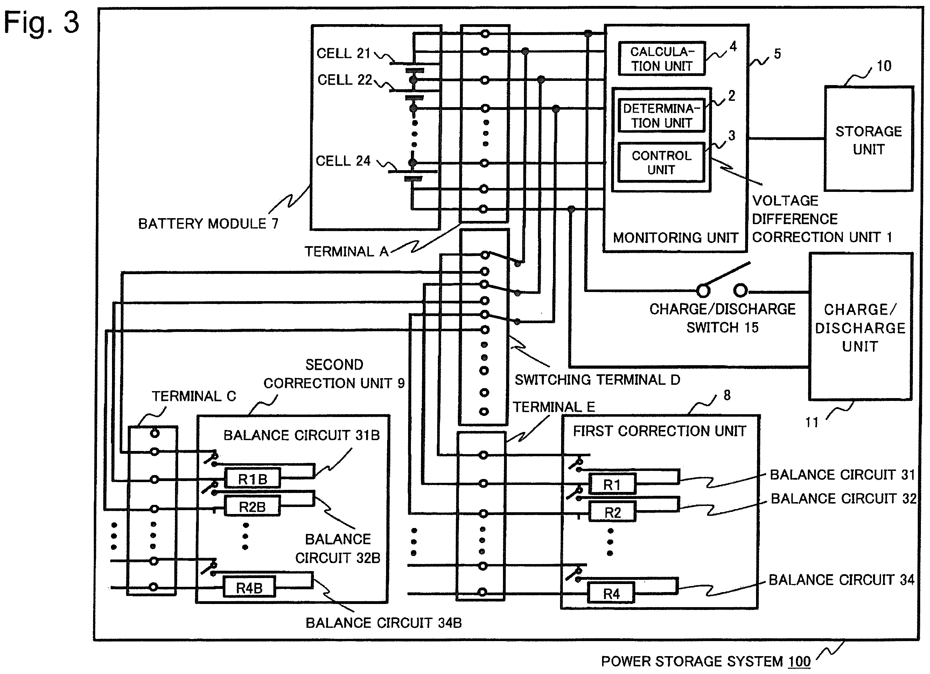

Fig. 3 is a detailed diagram illustrating an electrical connection between the battery module 7 and the power storage system 100. As illustrated in Fig. 3, the battery module 7 is electrically connected to the first correction unit 8 via the terminal A, a switching terminal D, and a terminal E. Furthermore, the battery module 7 is electrically connected to the second correction unit 9 on the balance board 13 illustrated in Fig. 2 via the terminal A, the switching terminal D, and a terminal C.

Electromotive force (also called cell voltages) of the respective cells constituting the battery module 7 is monitored with the calculation unit 4 of the monitoring unit 5. Moreover, the calculation unit 4 detects electromotive force (also called voltages) among the cells to calculate a voltage difference, and calculates ΔV which is a difference with a minimum cell voltage. This process is also called ΔV detection in the present exemplary embodiment. The determination unit 2 determines whether ΔV in the calculation unit 4 is larger or smaller than a predetermined threshold value.

The determination unit 2 notifies the control unit 3 of a determination result. This determination result is obtained by dividing ΔV into a plurality of ranks. For example, ΔV is divided into four ranks of smaller than Level 1, equal to or more than Level 1 and smaller than Level 2, equal to or more than Level 2 and smaller than Level 3, and equal to or more than Level 3 and is notified. The respective ranks are also called modes in the present exemplary embodiment.

The control unit 3, by receiving the determination result, switches a switch corresponding to the switching terminal D, and electrically connects the battery module 7 to the terminal E or the terminal C. By this connection, the battery module 7 is connected to any one of the first correction unit 8 and the second correction unit 9. The control unit 3 may also perform control in accordance with the determination result, to prevent the battery module 7 from being connected to the first correction unit 8 and the second correction unit 9. In this case, the switch arranged on the switching terminal D is set at a position at which it does not contact with both the terminal E and the terminal C.

As one example, it is possible to perform the following setting.

ΔV is smaller than Level 1: No correction is performed.

ΔV is equal to or more than Level 1 and smaller than Level 2: Correction of a voltage difference (hereinafter, also called voltage difference correction) by the first correction unit 8 is performed.

ΔV is equal to or more than Level 2: Voltage difference correction is performed in the second correction unit 9.

In the present exemplary embodiment, the voltage difference correction in the second correction unit 9 is also called "special balance correction".

The control unit 3 issues an alarm of the "special balance correction" and the like in equal to or more than Level 2. By this alarm, a user can recognize the occurrence of a situation requiring maintenance indicating a connection to the second correction unit 9. Furthermore, the control unit 3 may also notify a management server of the power storage system 100 of this alarm via a communication means such as the Internet for example.

In addition, the operation of the power storage system before the second correction unit 9 is electrically connected is decided in response to the convenience of a user.

The charge/discharge unit 11 is turned on/off by a charge/discharge switch 15 (Fig. 3). In the case of requiring charge/discharge, this is appropriately used.

The first correction unit 8 and the second correction unit 9 receive commands from the control unit 3 and correct electromotive force differences among the cells of the battery module 7. The second correction unit 9 is external to a casing that houses the first correction unit 8. The rating of circuit parts used in the second correction unit 9 are larger than that of circuit parts used in the first correction unit 8. In the second correction unit 9, correction of an electromotive force difference by a large current is possible as compared with the first correction unit 8. In other words, in the second correction unit 9, a rated current is large as compared with the first correction unit 8.

In the second correction unit 9, since the correction by the large current is possible as compared with the first correction unit 8, when a voltage difference is constant, a time required for the correction by the second correction unit 9 is shorter than a time required for the correction by the first correction unit 8. Therefore, the second correction unit 9 is also called a time shortening block. The second correction unit 9 is provided separately from the BMU board. Consequently, only when the correction by the second correction unit 9 is required, electrically connecting to the power storage system 100 is possible. Furthermore, the second correction unit 9 can be made portable, and even in the case of using a plurality of power storage systems 100, one can be used for them. Moreover, the second correction unit 9 is not always required to provide in a site using the power storage system 100, and may also be brought by a maintainer at any time maintenance.

The correction of the induced voltage difference performed in the first correction unit 8 and the second correction unit 9 is performed by a correction method generally used. As one example, the case in which, a correction method using passive balance (a passive type) is applied to the present exemplary embodiment, will be described in detail using Fig. 3.

Firstly, the calculation unit 4 measures electromotive force of a cell group (a cell 21 to a cell 24) by a voltage sensor (not illustrated). Next, the calculation unit 4 specifies a cell with the lowest electromotive force among the cells and sets the electromotive force of this cell as a minimum voltage value Vmin. In this example, the cell 21 is assumed to be a cell that outputs the minimum voltage value Vmin. Next, the calculation unit 4 calculates a difference between electromotive force of cells except for the cell 21 and the minimum voltage value Vmin.

The determination unit 2 determines whether this difference exceeds a predetermined threshold value.

The control unit 3 receives the determination of the determination unit 2 and gives an instruction to the first correction unit 8 or the second correction unit 9 so as to drive a balance circuit of a cell exceeding the threshold value (to turn on a switch).

A balance circuit 31 and a balance circuit 31B perform electromotive force difference correction of the cell 21. A balance circuit 32 and a balance circuit 32B perform electromotive force difference correction of the cell 22. A balance circuit 34 and a balance circuit 34B perform electromotive force difference correction of the cell 24.

A resistor R1, a resistor R2, and a resistor R4 are sequentially connected to the balance circuit 31, the balance circuit 32, and the balance circuit 34. By turning on the switch, discharge is performed. A resistor R1B, a resistor R2B, and a resistor R4B are connected to the balance circuit 31 B, the balance circuit 32B, and the balance circuit 34B, respectively. By turning on the switch, discharge is similarly performed. However, since the resistors R1B, R2B, and R4B are smaller than the resistors R1, R2, and R4, a large current flows through the balance circuit 31 B, the balance circuit 32B, and the balance circuit 34B as compared with the balance circuit 31, the balance circuit 32, and the balance circuit 34.

In this example, it is assumed that a difference between the electromotive force of the cell 22 and the cell 24 and the electromotive force of the cell 21 exceeds the threshold value. In this case, the control unit 3 turns on the switches of the balance circuit 32 of the cell 22 and the balance circuit 34 of the cell 24, which belong to the first correction unit 8, thereby discharging these cells. Alternatively, in this case, the control unit 3 turns on the switches of the balance circuit 32B of the cell 22 and the balance circuit 34B of the cell 24, which belong to the second correction unit 9, thereby discharging these cells.

Furthermore, the control unit 3 gives an instruction to the first correction unit 8 so as to stop the driving of the balance circuit 32 and the balance circuit 34 (to turn off the switches) at the time point at which the difference between the electromotive force values of the cell 22 and the cell 24 and the minimum voltage value Vmin has been equal to or less than the threshold value. Alternatively, the control unit 3 gives an instruction to the second correction unit 9 so as to stop the driving of the balance circuit 32B and the balance circuit 34B (to turn off the switches) at that time point.

The cell balance control scheme further includes an active balance scheme (an active type). This scheme is a method for accumulating temporary charge from cells with high electromotive force and charging the accumulated charge in low voltage cells for the purpose of redistribution, and may be applied to the present exemplary embodiment similarly to the passive type.

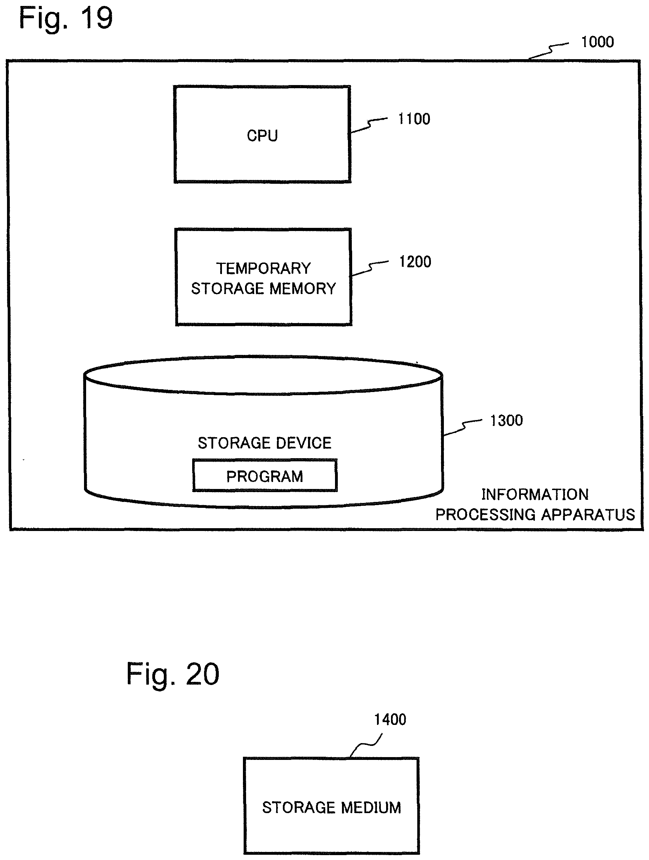

The calculation unit 4, the determination unit 2, and the control unit 3 may also be implemented with hardware realized by combining logical elements, or may also be realized through executing a program stored in a storage device 1300 of an information processing apparatus 1000 illustrated in Fig. 19 which will be described later by a CPU 1100 (CPU: Central Processing Unit).

The calculation unit 4 is also called a voltage difference detection unit or a voltage difference detection means. The determination unit 2 is also called a determination means. The control unit 3 is also called a control means. The first correction unit 8 and the second correction unit 9 are also called a second correction means and a second correction means.

### (Description of operation)

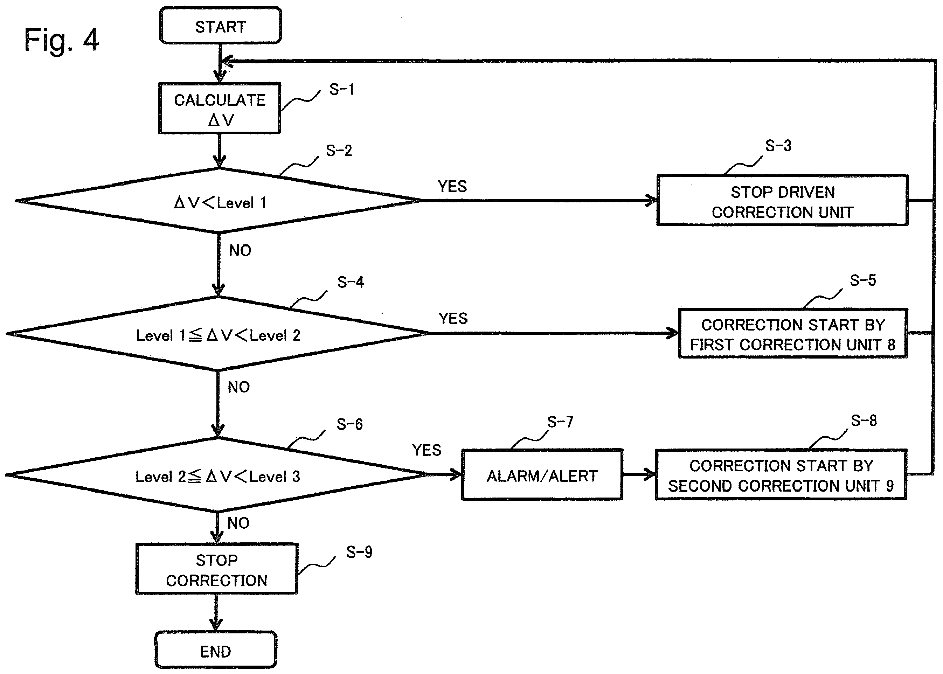

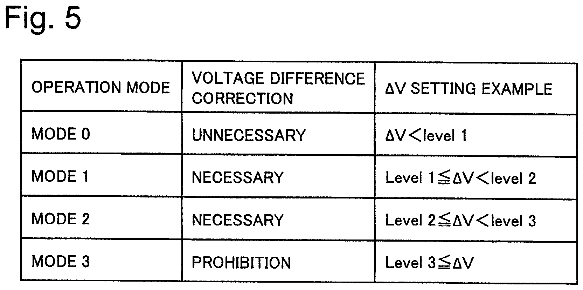

Fig. 4 is a flowchart illustrating the operations of the present exemplary embodiment. In the power storage system 100, the calculation unit 4 calculates ΔV and the determination unit 2 determines modes of the calculated ΔV based on setting stored in the storage unit 10. The modes are ranks decided by levels as described above. In the present exemplary embodiment, each mode is defined as illustrated in Fig. 5.

ΔV is smaller than Level 1: mode 0,
ΔV is equal to or more than Level 1 and smaller than Level 2: mode 1,
ΔV is equal to or more than Level 2 and smaller than Level 3: mode 2, and
ΔV is equal to or more than Level 3: mode 3.

In the case of the mode 0, the power storage system 100 is operated as usual. No voltage difference correction is performed.

In the case of the mode 1, voltage difference correction is performed in the first correction unit 8.

In the case of the mode 2, an alert unit (not illustrated) provided to the power storage system issues an alarm that alerts "special balance correction". Furthermore, the alert unit inputs a message indicating the "special balance correction" to a management server of the power storage system via the Internet. When the "special balance correction" alarm has been issued, a user can temporarily wait, electrically connect the time shortening block, which is a separate element, to the battery module by maintenance, and then perform the special balance correction.

In the case of the mode 3, the voltage difference correction is not performed in consideration of stability. The storage unit 10 stores the levels and the setting of the modes.

The calculation unit 4 measures the voltages of each cell including the battery module 7 at a predetermined time interval and calculates ΔV which is a difference with the minimum voltage (step S-1).

The determination unit 2 determines whether ΔV is smaller than Level 1 (step S-2).

When ΔV is smaller than Level 1, the determination unit 2 determines the situation of the battery system 100 as the mode 0 (step S-2: YES). In this case, the control unit 3 does not instruct the voltage difference correction. At this time point, if the first correction unit 8 or the second correction unit 9 is in a driving state, the control unit 3 stops this (step S-3) and disconnects a connection in the switching terminal D. The battery system 100 continues a normal operation and the calculation unit 4 subsequently measures the voltages of each cell at the same interval.

When ΔV is equal to or more than Level 1 (step S-2: NO), the determination unit 2 determines whether ΔV is smaller than Level 2 (step S-4).

When ΔV is equal to or more than Level 1 and smaller than Level 2, the determination unit 2 determines the situation of the power storage system 100 as the mode 1 (step S-4: YES). In this case, the control unit 3 connects the battery module 7 to the terminal E in the switching terminal D and instructs the first correction unit 8 to perform voltage difference correction. The first correction unit 8 performs the correction for eliminating ΔV (step S-5).

The correction is performed until ΔV is smaller than Level 1 and the calculation of ΔV and the determination of the modes are repeated during the correction (step S-1).

When ΔV is equal to or more than Level 2 (step S-4: NO), it is determined whether ΔV is smaller than Level 3 (step S-6).

When ΔV is equal to or more than Level 2 and is smaller than Level 3, the determination unit 2 determines the situation of the power storage system 100 as the mode 2 (step S-6: YES). In this case, the control unit 3 instructs the alert unit to issue an alarm (step S-7).

Furthermore, the control unit 3 connects the battery module 7 to the terminal C in the switching terminal D and instructs the second correction unit 9 to perform voltage difference correction. The second correction unit 9 performs the correction for eliminating ΔV (step S-8).

The correction is performed until ΔV is smaller than Level 1 and the calculation of ΔV and the determination of the modes are repeated during the correction (step S-1).

When ΔV is equal to or more than Level 3 (step S-6: NO), the control unit 3 stops the correction unit being driven and disconnects the connections with the terminal C and the terminal E in the switching terminal D (step S-9). In this case, the power storage system 100 may be stopped in response to the use situations of a user.

A user can appropriately update the setting of each level stored in the storage unit.
The setting examples of each level are as follows.

Level 1: 50 mV,
Level 2: 200 mV, and
Level 3: 500 mV.

In addition, the presence or absence of setting of the alarm may also be decided in response to the necessity of a user. Furthermore, in the present exemplary embodiment, the second correction unit 9 is external to the casing that houses the first correction unit 8; however, the casing may not be always used. When the casing is not used, the second correction unit 9 may be arranged spaced apart from the first correction unit 8 at an appropriately interval. For example, the second correction unit 9 may also be mounted in a board different from that of the first correction unit 8. That is, in the second correction unit 9, a temperature increase in the case of performing discharge through a large current may not have an influence on a board in which the first correction unit 8 has been mounted.

As the balance resistor R1, the balance resistor R2, the balance resistor R3, and the balance resistor R4 (Fig. 3) of the first correction unit 8, resistors having specifications of 10 Ω and 5 W are used for example.

As the balance resistor R1B, the balance resistor R2B; the balance resistor R3B, and the balance resistor R4B (Fig. 3) of the second correction unit 9, resistors having specifications of 1 Ω and 50 W are used for example.

According to the present exemplary embodiment, when a maximum voltage difference among a plurality of cells is large and when the maximum voltage difference is small, it is possible to select different rated correction circuits, so that it is possible to realize voltage difference correction at a low cost.

### <Second exemplary embodiment>

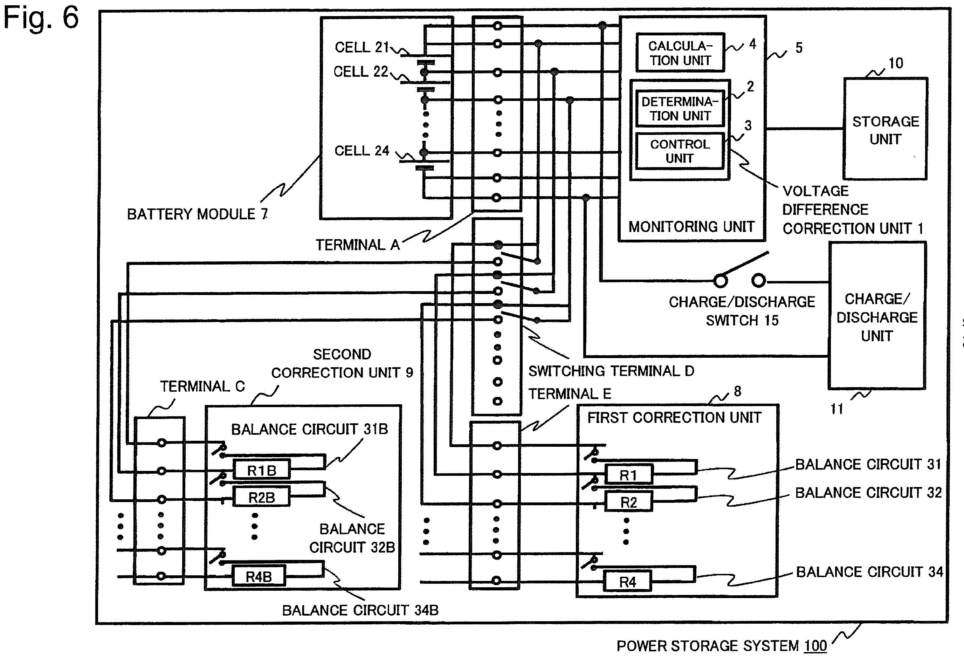

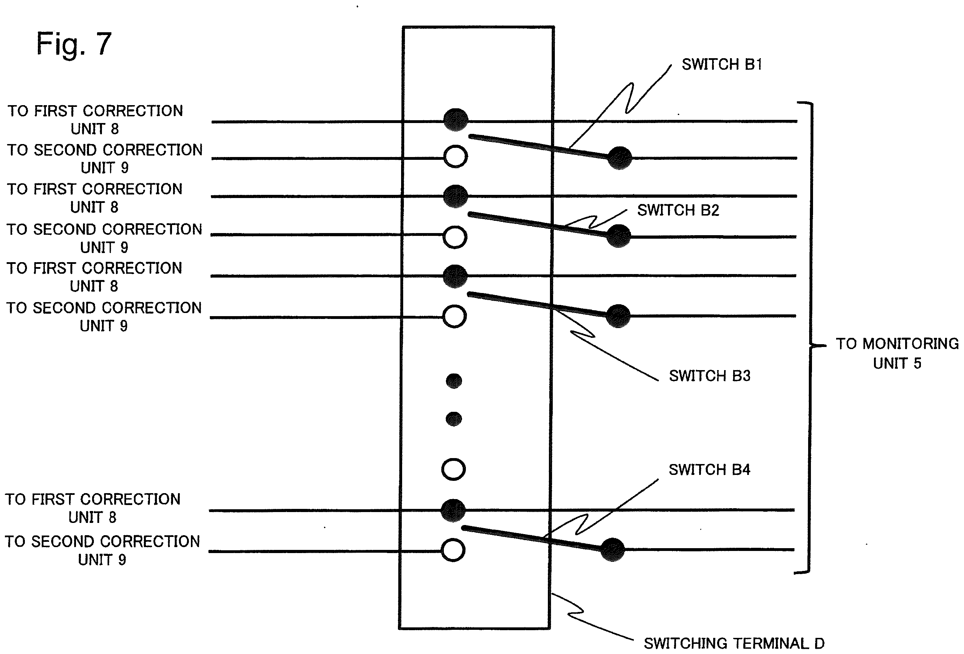

In the first exemplary embodiment, the control unit 3 has switched a voltage difference correction unit from the first correction unit 8 to the second correction unit 9 in the mode 2. The first correction unit 8 and the second correction unit 9 may also be simultaneously driven. Fig. 6 illustrates modes of voltage difference correction used in the second exemplary embodiment. The difference with the first exemplary embodiment is that the first correction unit 8 is always connected at the switching terminal D and ON/OFF of the second correction unit 9 are configured to be switched. Fig. 7 is an enlarged diagram of the vicinity of the switching terminal D. The first correction unit 8 is always connected to the monitoring unit 5. However, the connection of the second correction unit 9 to the monitoring unit 5 is switched by a switch B1, a switch B2, a switch B3, and a switch B4. The operations of the present exemplary embodiment are different from those of the first exemplary embodiment in the following three points. The flowchart illustrated in Fig. 4 is also applied to the present exemplary embodiment similarly to the first exemplary embodiment, but the operations of the control unit 3 are different from those of the first exemplary embodiment in the following three points.
(1) The control unit 3 disconnects only the terminal C from the battery module 7 in step S-3.
(2) The control unit 3 simply instructs the first correction unit 8 to perform voltage difference correction without connecting the battery module 7 to the terminal E in step S-5. The reason is because the terminal E and the battery module 7 have been always connected to each other.
(3) The control unit 3 also instructs the first correction unit 8 to perform voltage difference correction as well as the second correction unit 9 in step S-8.

An equivalent circuit at the time of correction in step S-8 of the present exemplary embodiment is obtained by connecting the balance resistors of the first correction unit 8 and the second correction unit 9 in parallel to one another. In Fig. 7, when the cell 21 is employed as an example, the total resistance of this circuit is R1*R1B/(R1+R1B) ("*" denotes integration and "/" denotes division). Since the total resistance of a corresponding circuit is R1B in the first exemplary embodiment and the total resistance value of the present exemplary embodiment is smaller than the total resistance, it is possible to allow a larger amount of current to flow at the time of correction. Consequently, more quick voltage difference correction is possible as compared with the first exemplary embodiment.

As one example, when R1 to R4 are set to 100 Ω, R1B to R4B are set to 1 Ω, and the maximum cell voltage and the minimum cell voltage Vmin of the battery module 7 are set to 4.0 V and 3.7 V, ΔV is 300 mV. When the first correction unit 8 has performed correction, a current flowing at the time of the correction (also called a balance current) is 40 mA. When the second correction unit 9 has performed correction, the balance current is 4 A. In the case of the present exemplary embodiment using both the first correction unit 8 and the second correction unit 9, the balance current is 4.04 A.

Since a time required for correction (also called a correction time) is short as the balance current is large, it is possible to shorten the correction time beyond the first exemplary embodiment in the present exemplary embodiment.

### <Third exemplary embodiment>

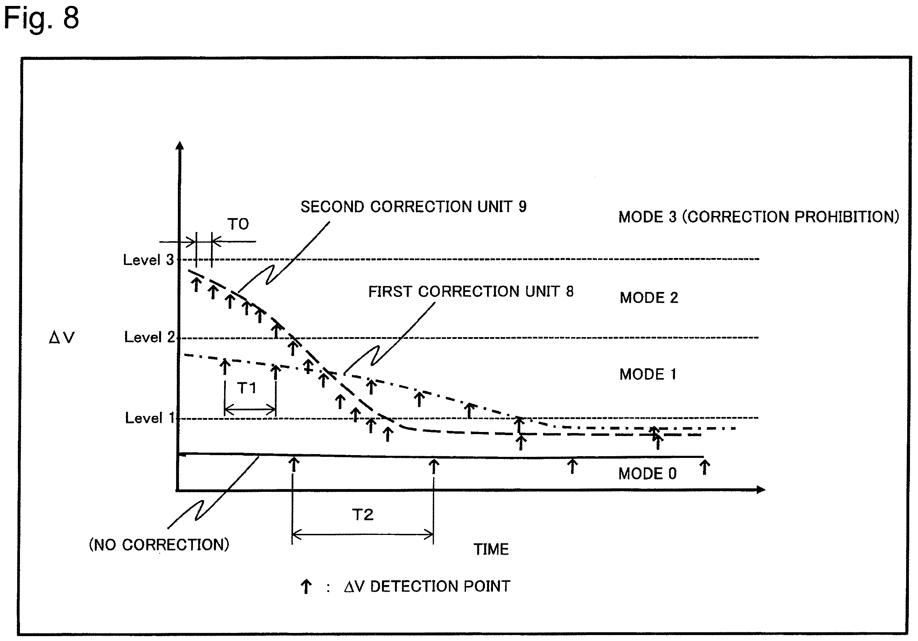

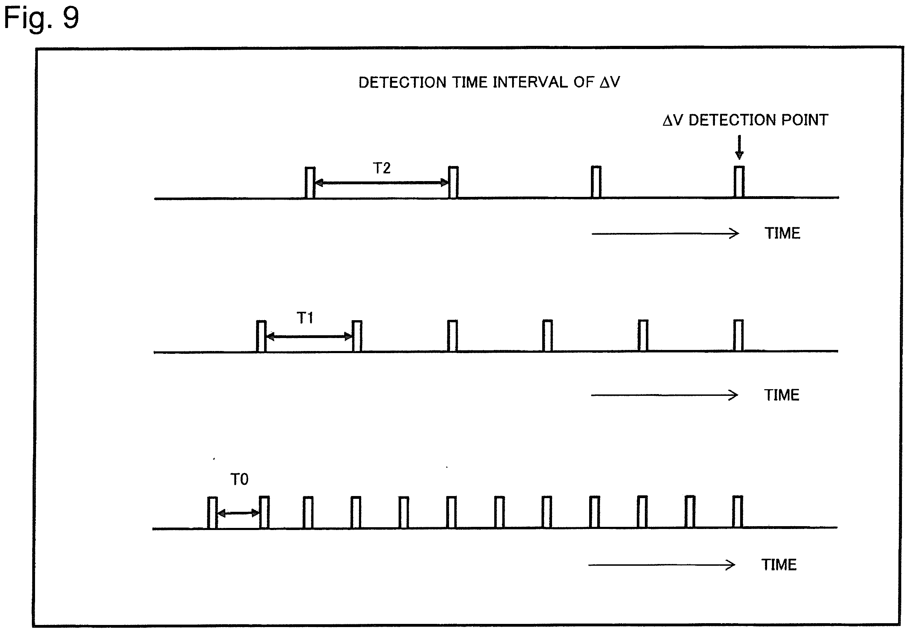

In the first and second exemplary embodiments, the calculation unit 4 detects ΔV at a predetermined time interval. Fig. 8 illustrates one example of a time change of ΔV in the case in which each correction unit performs the voltage difference correction and in the mode 0 requiring no correction. When the voltage difference correction is performed in the second correction unit 9 (the broken line), a voltage difference is corrected at a high speed as compared with the case in which the voltage difference correction is performed in the first correction unit 8 (the one dot chain line). Excessive correction in which a correction target cell becomes less than the minimum cell voltage Vmin is not necessary in the operation of the power storage system 100. From the standpoint of energy saving, in order to prevent such excessive correction, it is effective to set a detection time point of ΔV (also called a detection point) indicated by an arrow to be high in the second correction unit 9 as compared with frequency in the first correction unit 8. Furthermore, in the case (the mode 0) in which ΔV is smaller than Level 1 requiring no correction, ΔV may also be detected with lower frequency as compared with the case in which the first correction unit 8 has been driven. In Fig. 8, the ΔV detection points in the present exemplary embodiment are illustrated by arrows, which will be described later. In the present exemplary embodiment, the length of a time interval of ΔV detection (hereinafter, also called a detection interval) is controlled according to whether a used correction unit is the first correction unit 8, the second correction unit 9, or any correction unit is not used. In the present exemplary embodiment, as the detection interval, three types of "T0", "T1", and "T2" (T0<T1<T2) illustrated in Fig. 9 are used.

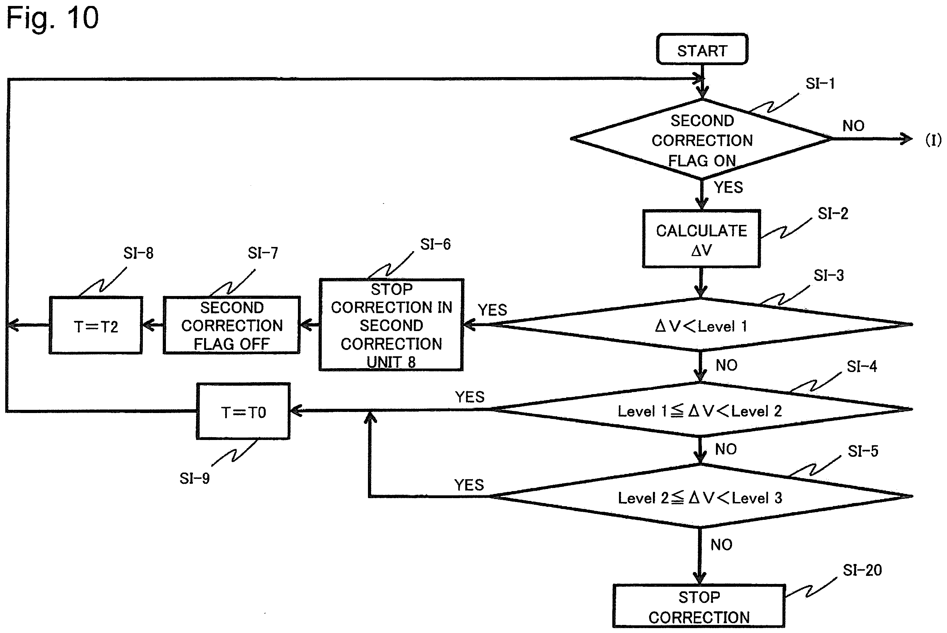

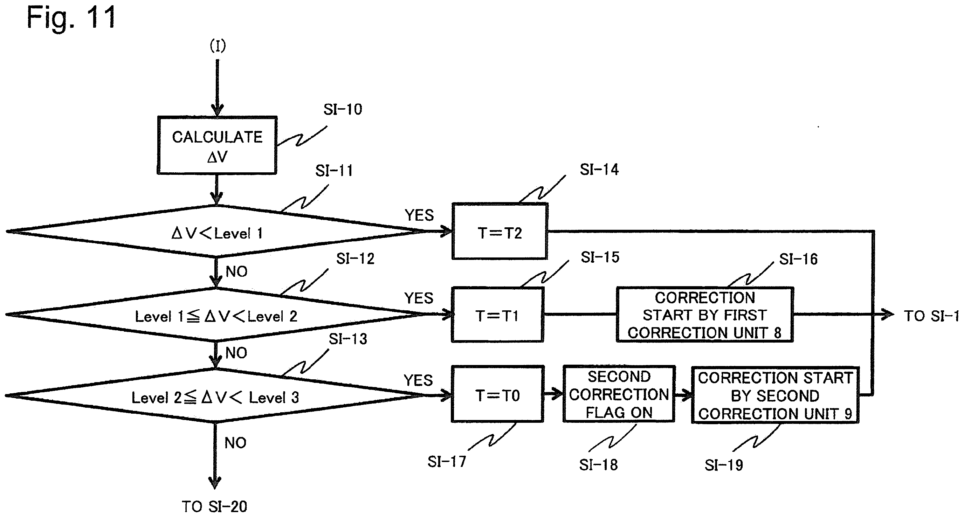

Fig. 10 and Fig. 11 are flowcharts illustrating operations of the third exemplary embodiment. Fig. 11 illustrates processes after (I) of Fig. 10. The control unit 4 detects whether a second correction flag is ON or OFF. The second correction flag is a result obtained by setting 1 or 0 in a memory (not illustrated) with respect to the presence or absence of various states of the second correction unit 9. Raising the second correction flag (also called turning on the second correction flag or setting the second correction flag) represents that 1 is set in the memory. As will be described later, in the present exemplary embodiment, in a step in which the second correction unit 9 has been decided to perform voltage difference correction, the control unit 3 raises the second correction flag. In a step in which the voltage difference correction in the second correction unit 9 has ended, the control unit 3 resets the flag and allows the flag to be in an off state. (1) In an initial state, when the second correction unit 9 is in a driving state (when the second correction flag is ON) (step SI-1: YES), since the second correction unit 9 is being operated, the voltage difference correction is being performed.

The calculation unit 4 measures the voltages of each cell of the battery module 7 at the time interval "T0" and calculates ΔV which is the difference with the minimum voltage (step SI-2).

When ΔV is smaller than Level 1, the determination unit 2 determines the situation of the battery system 100 as the mode 0 (step SI-3: YES).

The control unit 3 receives this determination to turn off the second correction unit 9 (step SI-6) and resets the second correction flag (step SI-7). Herein, turning off the second correction unit 9 represents electrically disconnecting the second correction unit 9 from the battery module 7 in the switching terminal D. The control unit 3 sets the detection interval of ΔV to "T2" (step SI-8). After this setting, the processes started from SI-1 are repeated and ΔV is calculated at the detection interval "T2".

When ΔV is equal to or more than Level 1 (step SI-3: NO), it is determined whether ΔV is smaller than Level 2 (step SI-4). When ΔV is equal to or more than Level 1 and smaller than Level 2, the determination unit 2 determines the situation of the power storage system 100 as the mode 1 (step SI-4: YES).

The control unit 3 holds the detection interval "T0" of ΔV (step SI-9). After step SI-8, the processes started from SI-1 are repeated.

When ΔV is equal to or more than Level 2 (step SI-4: NO), it is determined whether ΔV is smaller than Level 3 (step SI-5). When ΔV is equal to or more than Level 2 and smaller than Level 3, the determination unit 2 determines the situation of the power storage system 100 as the mode 2 (step SI-5: YES). The control unit 3 holds the detection interval "T0" of ΔV (step SI-9). After step SI-9, the processes started from SI-1 are repeated.

When ΔV is equal to or more than Level 3 (step SI-5: NO), the correction is stopped (step SI-20).
(2) In the initial state, when the second correction unit 9 is not driven (when the second correction flag is OFF) (step SI-1: NO)

As illustrated in Fig. 11, the calculation unit 4 measures the voltages of each cell of the battery module 7 at the time interval "T2" or "T1" and calculates ΔV which is the difference with the minimum voltage (step SI-10).

When ΔV is smaller than Level 1, the determination unit 2 determines the situation of the battery system 100 as the mode 0 (step SI-11: YES). The control unit 3 receives this determination to turn off the first correction unit 8 when the first correction unit 8 is driven and sets the time interval "T2" (step SI-14). After this setting, the processes started from SI-1 are repeated.
When ΔV is equal to or more than Level 1 (step SI-11: NO), it is determined whether ΔV is smaller than Level 2 (step SI-12). When ΔV is equal to or more than Level 1 and smaller than Level 2, the determination unit 2 determines the situation of the power storage system 100 as the mode 1 (step SI-12: YES).

The control unit 3 sets or holds the detection interval "T1" of ΔV (step SI-15). Next, the control unit 3 operates the first correction unit 8 (step SI-16). After step SI-16, the processes started from SI-1 (Fig. 10) are repeated.

When ΔV is equal to or more than Level 2 (step SI-12: NO), it is determined whether ΔV is smaller than Level 3 (step SI-13). When ΔV is equal to or more than Level 2 and smaller than Level 3, the determination unit 2 determines the situation of the power storage system 100 as the mode 2 (step SI-13: YES). The control unit 3 sets the detection interval "T0" of ΔV (step SI-17). Furthermore, the control unit 3 turns on the second correction flag (step SI-18). After turning on the second correction flag, the control unit 3 operates the second correction unit 9 (step SI-19). After SI-19, the processes started from SI-1 (Fig. 10) are repeated.

When ΔV is equal to or more than Level 3 (step SI-13: NO), the correction is stopped (step SI-20).

In the present exemplary embodiment, when ΔV is equal to or more than Level 1 and smaller than Level 2 (step SI-4: YES), the second correction unit 9 is driven as it is and the detection interval is set to "T0"; however, the second correction unit 9 may also be turned off and the first correction unit 8 may also be driven. In this case, subsequently to step SI-4, processes are performed to turn off the second correction unit 9, reset the second correction flag, set the detection interval "T1", and turn on the first correction unit 8. Furthermore, in this case, the process of the process (T=T0) of SI-9 is omitted.

In the present exemplary embodiment, since the check frequency of ΔV is changed in response to a used correction circuit, it is possible to avoid unnecessarily performing voltage difference correction with high accuracy. Furthermore, when ΔV is small, since the check frequency of ΔV is reduced, the load of the monitoring unit 5 is suppressed.

### <Fourth exemplary embodiment>

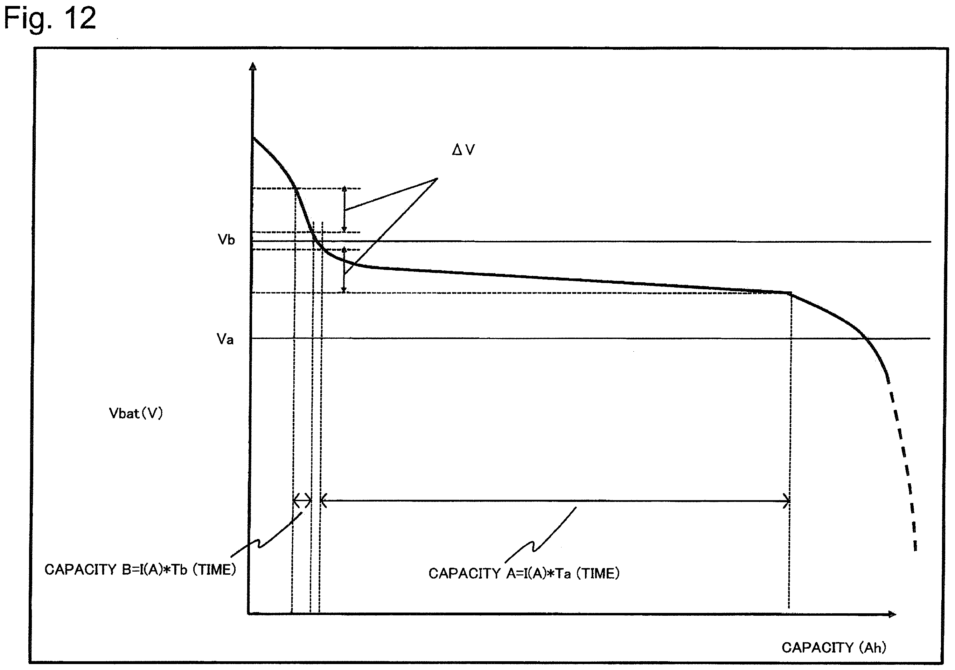

In the first to third present exemplary embodiments, by the magnitude of ΔV, whether to use a correction unit has been decided and a correction unit to be used has been selected. However, even though ΔV is at the same level, there is a case in which battery capacity differences are considerably different by voltage regions of batteries. For example, there is a lithium battery showing discharge characteristics illustrated in Fig. 12. In Fig. 12, a vertical axis denotes a cell voltage Vbat (unit V: Volt) and a horizontal axis denotes a discharge capacity (unit Ah: ampere hour). Fig. 12 illustrates that capacity differences of batteries are different depending on the voltage regions thereof even when ΔV at the same level is corrected.

Such discharge characteristics have an influence on the efficiency of voltage difference correction. For example, in the case of correcting ΔV at the time point at which the minimum cell voltage Vmin is larger than Vb, when a discharge current I is made constant, correction of ΔV is ended during the discharge of a time Tb (a capacity B=I*Tb(Ah)). However, in the case of correcting the same ΔV at the time point at which Vmin is smaller than Vb and is larger than Va, there is a case in which the discharge of a time Ta (a capacity A=I*Ta(Ah)) longer than the time Tb is required according to the voltages of the cells. That is, even though a value indicated by ΔV belongs to the mode 1, when a battery voltage is equal to or more than Va and is equal to or less than Vb, it is possible to expect that correction is completed more quickly when the second correction unit 9 performs correction as compared with the case in which the first correction unit 8 performs correction. In the present exemplary embodiment, a minimum voltage in a voltage zone including a flat part with battery discharge characteristics is set to Va. Furthermore, a maximum voltage of the voltage zone is set to Vb.

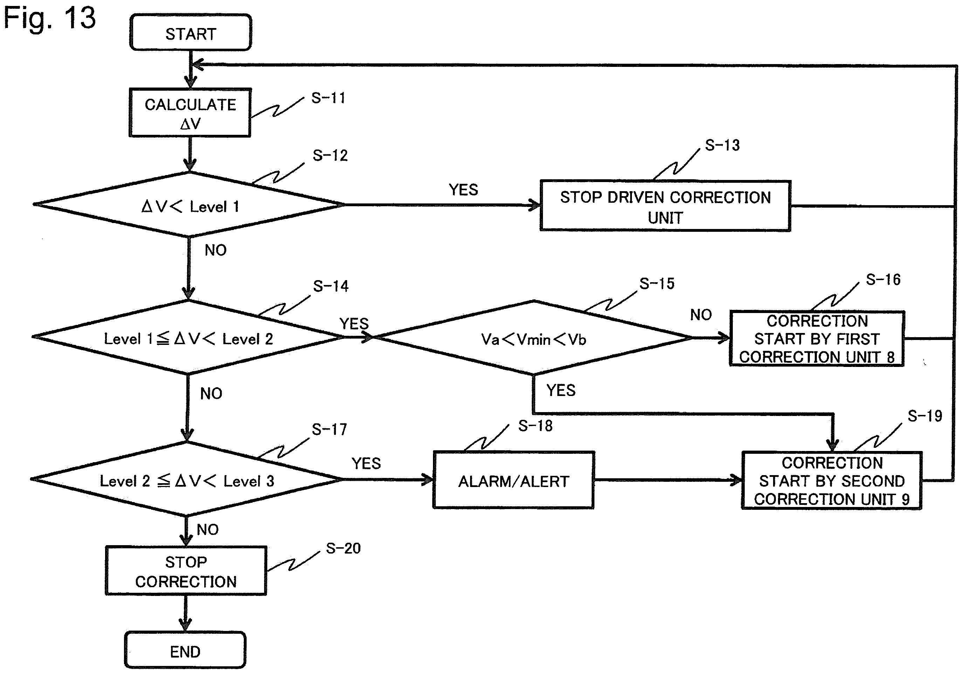

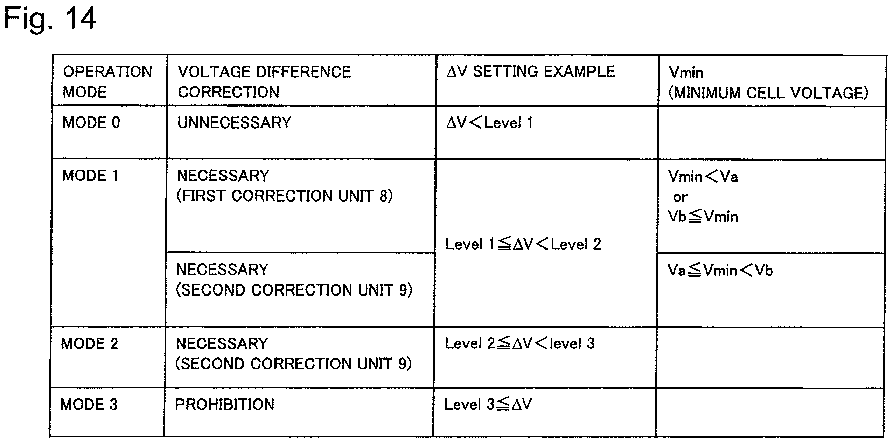

Fig. 13 is a flowchart illustrating an operation of the fourth exemplary embodiment. Furthermore, Fig. 14 is a diagram illustrating the definition of modes in the present exemplary embodiment.

The calculation unit 4 measures the voltages of each cell of the battery module 7 at a predetermined time interval and calculates the difference ΔV with Vmin (step S-11). The determination unit 2 decides the levels of ΔV according to the definition illustrated in Fig. 14 and decides the modes of ΔV from the levels (step S-12).

When ΔV is smaller than Level 1, the determination unit 2 determines the situation of the battery system 100 as the mode 0 (step S-12: YES). In this case, the control unit 3 does not instruct voltage difference correction. At this time point, if the first correction unit 8 or the second correction unit 9 is in a driving state, the control unit 3 stops these correction units (step S-13) and disconnects a connection in the switching terminal D. The battery system 100 continues a normal operation and the calculation unit 4 subsequently measures the voltages of each cell at the same interval.

When ΔV is equal to or more than Level 1 (step S-12: NO), the determination unit 2 determines whether ΔV is smaller than Level 2 (step S-14). When ΔV is equal to or more than Level 1 and smaller than Level 2, the determination unit 2 determines the situation of the power storage system 100 as the mode 1 (step S-14: YES). Subsequently, the determination unit 2 determines whether Vmin is larger than Va and smaller than Vb (step S-15). When Vmin is larger than Va and smaller than Vb (step S-15: YES), the control unit 3 connects the battery module 7 to the terminal C in the switching terminal D and instructs the second correction unit 9 to perform voltage difference correction. The second correction unit 9 performs the correction for eliminating ΔV (step S-19). The correction is performed until ΔV is smaller than Level 1 and the calculation of ΔV and the processes from the mode determination are repeated during the correction (step S-11).

When Vmin is equal to or less than Va or is equal to or more than Vb (step S-15: NO), the control unit 3 connects the battery module 7 to the terminal E in the switching terminal D and instructs the first correction unit 8 to perform voltage difference correction. The first correction unit 8 performs the correction for eliminating ΔV (step S-16). The correction is performed until ΔV is smaller than Level 1 and the calculation of ΔV and the processes from the mode determination are repeated during the correction (step S-11).

When ΔV is equal to or more than Level 2 (step S-14: NO), it is determined whether ΔV is smaller than Level 3 (step S-17). When ΔV is equal to or more than Level 2 and smaller than Level 3, the determination unit 2 determines the situation of the power storage system 100 as the mode 2 (step S-17: YES). In this case, the control unit 3 instructs the alert unit to issue an alarm (step S-18). Furthermore, the control unit 3 connects the battery module 7 to the terminal C in the switching terminal D and instructs the second correction unit 9 to perform voltage difference correction. The second correction unit 9 performs the correction for eliminating ΔV (step S-19). The correction is performed until ΔV is smaller than Level 1 and the calculation of ΔV and the determination of the modes are repeated during the correction (step S-11).

When ΔV is equal to or more than Level 3 (step S-17: NO), the control unit 3 stops a correction units being driven and disconnects a connection with the terminal C and the terminal E at the switching terminal D (step S-20). In this case, in response to the use situation of a user, the power storage system 100 may also be stopped.

As the values of Va and Vb, Vb is set to 3.5 V and Va is set to 3.0 V for example.

However, the values of Va and Vb are not limited to these values and the numerical values may be appropriately changed in response to the specifications of the power storage system 100.

In the present exemplary embodiment, a correction unit capable of performing voltage difference correction more efficiently is decided from correction units depending on the magnitude of the minimum cell voltage Vmin as well as ΔV, so that more quick voltage difference correction is possible as compared with the first to third exemplary embodiments.

### <Fifth exemplary embodiment>

In all the first to fourth exemplary embodiments, ΔV is always detected at a predetermined interval and a correction unit is driven. Furthermore, in the first to fourth exemplary embodiments, while a correction unit is performing voltage difference correction, the calculation of ΔV is continuously performed. When the characteristics of the correction unit are stabilized and the amount of voltage difference correction obtained for a constant correction time is constant, it is not always to continuously perform the calculation of ΔV and the correction unit may also be controlled by a timer. Furthermore, a time interval (an interval) for calculating ΔV can be changed in response to the magnitude of ΔV. For example, when ΔV is large to be equal to or more than Level 1, the calculation of ΔV is necessary at a short interval. However, when ΔV is sufficiently lower than Level 1, it is not necessary to frequently perform the calculation of ΔV. The interval of the ΔV calculation is increased, resulting in a reduction of a load on the monitoring unit 5. That is, the power storage system 100 withstanding long-term use is realized.

The fifth exemplary embodiment is an exemplary embodiment in which the driving of the second correction unit 9 is controlled by a timer. Furthermore, the fifth exemplary embodiment is an exemplary embodiment in which when ΔV has been sufficiently reduced by timer driving, an interval of subsequent ΔV calculation is set to be long as compared with other cases.

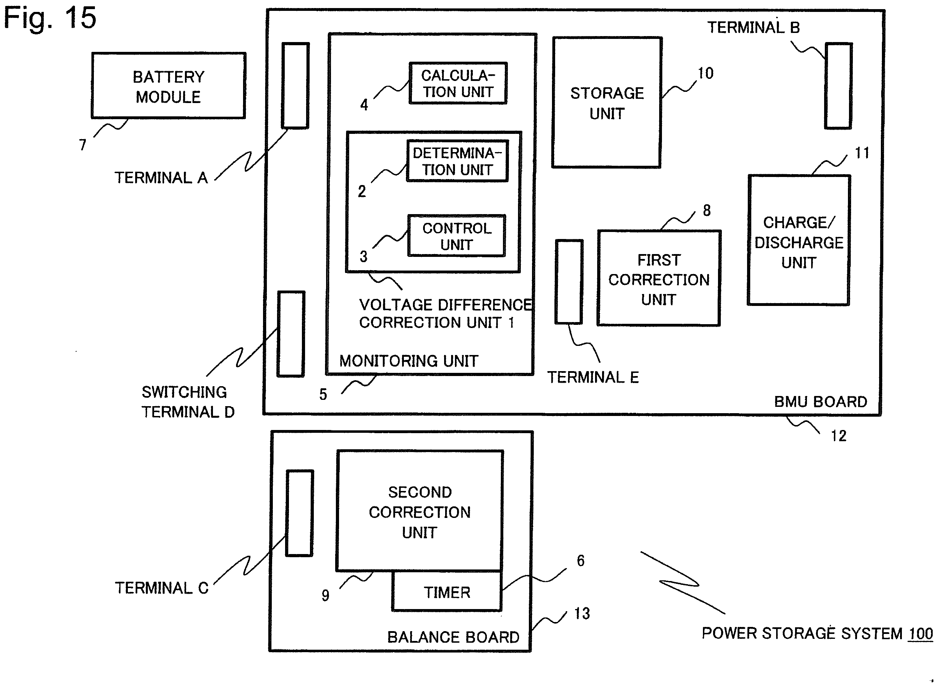

In the fifth exemplary embodiment, level 0 further lower than level 1 is set as the value of ΔV. A correction time in the second correction unit 9, for example, is set as a time until ΔV reaches Level 0 from Level 1. In the present exemplary embodiment, it is assumed that the second correction unit 9 is superior in the reproducibility of a voltage difference correction amount according to a time and a time change of the voltage difference correction amount is expectable. For time setting, a timer 6 (Fig. 15) is used. In this case, since continuous ΔV calculation is not necessary, a load on the monitoring unit 5 is reduced. In the present exemplary embodiment, the first correction unit 8 uses no timer and the detection of ΔV is repeated, so that voltage difference correction is performed up to Level 1. The second correction unit 9 is driven by setting a time required for reducing ΔV up to Level 0 by the timer 6. By this configuration, a load on the monitoring unit 5 is reduced and high accurate voltage difference correction is realized. When ΔV has reached Level 0 sufficiently smaller than Level 1 by the second correction unit 9, a time interval of subsequent ΔV detection can be increased as compared with the case in which ΔV is near Level 1 by the first correction unit 8. The reason is because a time is required when ΔV increases beyond Level 1.

Fig. 15 is a block diagram illustrating the configuration of the fifth exemplary embodiment. The fifth exemplary embodiment is equal to the first to fourth exemplary embodiments except that the timer 6 is installed at the second correction unit 9.

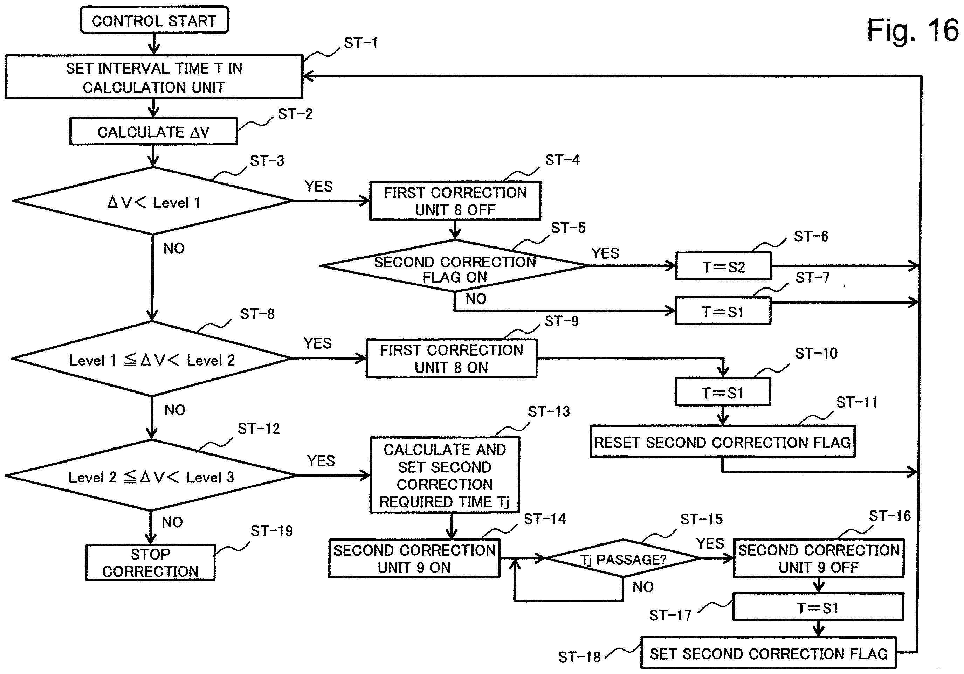

Fig. 16 is a flowchart illustrating operations of the fifth exemplary embodiment.
A time interval (an interval time T) for measuring the voltages of each cell is set in the calculation unit 4 (step ST-1). As the interval time T, "S1" and "S2" are selected. "S2" is longer than "S1". The calculation unit 4 measures the cell voltages of each cell of the battery module 7 at the time interval set in step ST-1, and calculates the difference ΔV with the minimum voltage. The determination unit 2 decides the level of ΔV and decides the modes of ΔV from the levels (step ST-2).

When ΔV is smaller than Level 1, the determination unit 2 determines the situation of the battery system 100 as the mode 0 (step ST-3: YES). In this case, the control unit 3 does not instruct voltage difference correction. At this time point, if the first correction unit 8 is in a driving state, the control unit 3 stops this (step ST-4). Subsequently, the control unit 3 detects whether the second correction flag has been set (step ST-5). As will be described later, in the present exemplary embodiment, differently from the fourth exemplary embodiment, the second correction flag is set at the time point at which correction of the second correction unit 9 has been completed. When the second correction flag is ON (step ST-5: YES), the control unit 3 sets "S2" longer than "S1" as the interval time T (step ST-6). After the setting, the processes from ST-1 are repeated. The reason for setting "S2" is for determining that ΔV reaches Level 0, which is a value sufficiently lower than Level 1, by correction using the timer 6 in the second correction unit 9. When the second correction flag is OFF (step ST-5: NO), the control unit 3 sets "S1" as the interval time (step ST-7). After the setting, the processes from ST-1 are repeated.

When ΔV is equal to or more than Level 1 (step ST-3: NO), it is determined whether ΔV is smaller than Level 2 (step ST-8). When ΔV is equal to or more than Level 1 and smaller than Level 2, the determination unit 2 determines the situation of the power storage system 100 as the mode 1 (step ST-8: YES). In this case, the control unit 3 connects the battery module 7 to the terminal E in the switching terminal D and instructs the first correction unit 8 to perform voltage difference correction. The first correction unit 8 performs the correction for eliminating ΔV (step ST-9). The control unit 3 sets "S1" as the interval time (step ST-10). When the second correction flag is ON, the control unit 3 resets this (step ST-11). Thereafter, the processes from ST-1 are repeated.

When ΔV is equal to or more than Level 2 (step ST-8: NO), it is determined whether ΔV is smaller than Level 3 (step ST-12). When ΔV is equal to or more than Level 2 and smaller than Level 3, the determination unit 2 determines the situation of the power storage system 100 as the mode 2 (step ST-12: YES). In this case, the control unit 3 calculates a second correction required time Tj required for lowering ΔV to Level 0 lower than Level 1 (step ST-13). Next, the control unit 3 sets the timer 6 of the second correction unit 9 to Tj and operates the second correction unit 9 (step ST-14). Next, the timer 6 measures Tj (step ST-15). When Tj has passed (step ST-15: YES), the control unit 3 turns off the second correction unit 9 (step ST-16). Subsequently, the control unit 3 sets "S1" as the interval time (step ST-17). Next, the control unit 3 raises the second correction flag (step ST-18). After the second correction flag has been raised, the processes from ST-1 are repeated. When Tj has not passed (step ST-15: NO), the second correction unit 9 is still ON.

When ΔV is equal to or more than Level 3 (step ST-12: NO), the control unit 3 stops the correction unit being driven and disconnects the connections with the terminal C and the terminal E in the switching terminal D (step ST-19). In this case, the power storage system 100 may be stopped in response to the use situations of a user.

In the present exemplary embodiment, it is possible to suppress a load of the monitoring unit 5 to be small. The reason is because no ΔV calculation is performed during the use of the timer 6. Furthermore, the reason is because when the second correction unit 9 has been driven, a voltage difference has been sufficiently corrected and the interval of subsequent ΔV calculation can be set to be large.

The calculation of the second correction required time Tj is performed based on the discharge characteristics described in the fourth exemplary embodiment. That is, Tj is obtained by dividing discharge capacity required for discharge of ΔV by a current generated in the second correction unit 9.

### <Sixth exemplary embodiment>

In the fifth exemplary embodiment, after Tj passes, the second correction unit 9 is stopped (step ST-16 of Fig. 16). It is also possible to select an exemplary embodiment in which the second correction unit 9 is not stopped such as the case in which the performance of the second correction unit 9 deteriorates and sufficient reproducibility of voltage difference reduction is not obtained. In this case, the power storage system 100 needs to high frequently detect ΔV after the passage of Tj in order to prevent ΔV from being excessively decreased as compared with the case in which the first correction unit 8 corrects a voltage difference. In the present exemplary embodiment, the power storage system 100 detects ΔV at the time interval "S0" shorter than "S1" at the time of the operation of the second correction unit 9 after Tj. In the case of using the first correction unit 8, since the degree of a change of ΔV is gentler than the second correction unit 9, the power storage system 100 detects ΔV at the time interval "S1". In the case of using no correction unit, the power storage system 100 detects ΔV at the longest time interval "S2". That is, the length of the time interval is narrowed in sequence of S2>S1>S0.

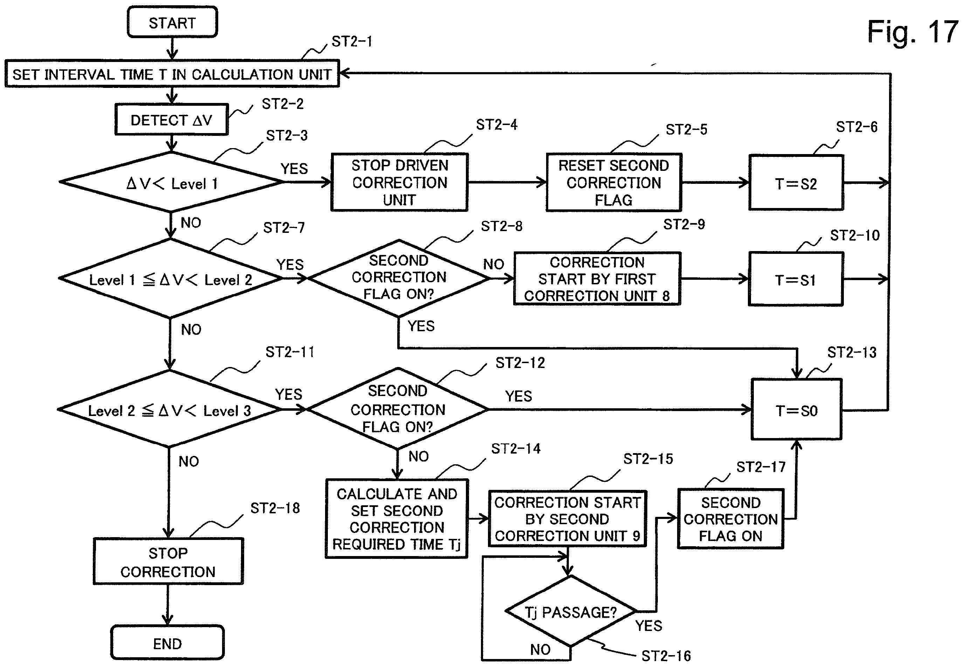

Fig. 17 is a flowchart illustrating an operation of the sixth exemplary embodiment.

A time interval (an interval time T) for measuring the voltages of each cell is set in the calculation unit 4 (step ST2-1). As the interval time, any one of "S0", "S1", and "S2" is selected.

The calculation unit 4 measures the voltages of each cell of the battery module 7 at a predetermined time interval and calculates ΔV which is a difference with the minimum voltage. The determination unit 2 decides the levels of ΔV and decides the modes of ΔV from the levels (step ST2-2).

When ΔV is smaller than Level 1, the determination unit 2 determines the situation of the battery system 100 as the mode 0 (step ST2-3: YES). In this case, the control unit 3 does not instruct voltage difference correction. At this time point, if there is a correction unit in a driving state, the control unit 3 stops the correction unit (step ST2-4).

Subsequently, when the second correction flag has been set, the control unit 3 resets this (step ST2-5). As will be described later, in the present exemplary embodiment, differently from the fifth exemplary embodiment, the second correction flag is set at the time point at which the required time Tj has passed.

Further subsequently, the control unit 3 sets "S2" as the interval time T (step ST2-6). After this setting, the processes from step ST2-1 are repeated.

When ΔV is equal to or more than Level 1 (step ST2-3: NO), it is determined whether ΔV is smaller than Level 2 (step ST2-7).

When ΔV is equal to or more than Level 1 and smaller than Level 2, the determination unit 2 determines the situation of the power storage system 100 as the mode 1 (step ST2-7: YES).

The control unit 3 detects whether the second correction flag has been set (step ST2-8).

When the second correction flag has not been set (step ST2-8: NO), the control unit 3 connects the battery module 7 to the terminal E in the switching terminal D and instructs the first correction unit 8 to perform voltage difference correction. The first correction unit 8 performs the correction for eliminating ΔV (step ST2-9).

The control unit 3 sets "S1" as the interval time T (step ST2-10). After this setting, the processes from step ST2-1 are repeated.

When the second correction flag has been set (step ST2-8: YES), the control unit 3 sets "S0" as the interval time T (step ST2-13).

After this setting, the processes from step ST2-1 are repeated. The reason for setting "S0" is for detecting ΔV high frequently and avoiding ΔV from being unnecessarily reducing by high speed correction by the second correction unit 9.

When ΔV is equal to or more than Level 2 (step ST2-7: NO), it is determined whether ΔV is smaller than Level 3 (step ST2-11). When ΔV is equal to or more than Level 2 and smaller than Level 3, the determination unit 2 determines the situation of the power storage system 100 as the mode 2 (step ST2-11: YES). The control unit 3 detects whether the second correction flag has been set (step ST2-12).

When the second correction flag has been set (step ST2-12: YES), the control unit 3 sets "S0" as the interval time T (step ST2-13). After this setting, the processes from step ST2-1 are repeated.

When the second correction flag has not been set (step ST2-12: NO), the control unit 3 calculates the second correction required time Tj required for lowering ΔV to Level 0 lower than Level 1 (step ST2-14).

The control unit 3 sets the timer 6 of the second correction unit 9 to Tj and operates the second correction unit 9 (step ST2-15).

The timer 6 measures a time and determines whether Tj has passed (step ST2-16). Until Tj passes, the timer 6 continues this determination (step ST2-16: NO). When Tj has passed (step ST2-16: YES), the control unit 3 sets the second correction flag (step ST2-17).

Furthermore, the control unit 3 sets "S0" as the interval time T (step ST2-13). After this setting, the processes from step ST2-1 are repeated.

When ΔV is equal to or more than Level 3 (step ST2-11: NO), the determination unit 2 determines the situation of the power storage system 100 as the mode 3. The control unit 3 stops the first correction unit 8 being driven, disconnects the connections with the terminal C and the terminal E in the switching terminal D, and stops the correction (step ST2-18). In this case, the power storage system 100 may be stopped in response to the use situations of a user.

In the present exemplary embodiment, even after the timer 6 has been driven, since ΔV is detected without stopping the second correction unit 9, even when the operation of the second correction unit 9 has not been stabilized due to some reasons, it is possible to perform voltage difference correction high accurately.

### <Seventh exemplary embodiment>

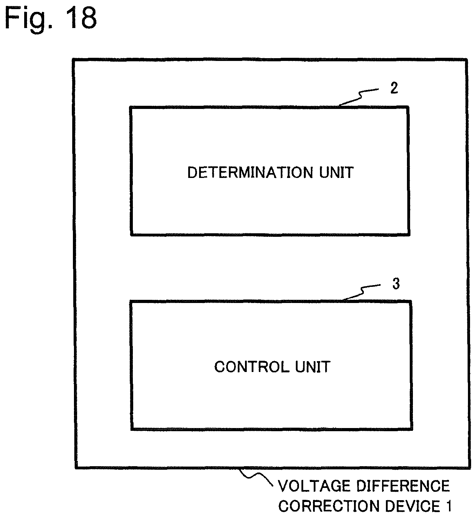

Fig. 18 is a block diagram illustrating functions according to the seventh exemplary embodiment of the present invention. A voltage difference correction device 1 according to the seventh exemplary embodiment of the present invention includes the determination unit 2 and the control unit 3. The determination unit 2 selects at least one of the first correction unit 8 and the second correction unit 9 mounted in a board different from that of the first correction unit 8 based on the magnitudes of voltage differences outputted by a voltage difference detection unit that detects voltage differences among a plurality of cells provided in a power storage system at a predetermined time interval. The control unit 3 drives the first correction unit 8 or second correction unit 9 selected by the determination unit 2 to reduce the voltage differences.

According to the present exemplary embodiment, it is possible to realize voltage difference correction at a low cost.

The present invention described using the above-described first to seventh exemplary embodiments as examples is achieved by supplying a program to the information processing apparatus 1000 illustrated in Fig. 19 and then executing the program with respect to the CPU 1100. The program is a program capable of realizing the functions of the flowcharts (Fig. 4, Fig. 10, Fig. 11, Fig. 13, Fig. 16, and Fig. 17) referred to in the descriptions of the exemplary embodiments. Alternatively, the program is a program capable of realizing the control unit 3 in at least the block diagrams illustrated in Fig. 1, Fig. 2, Fig. 15, and Fig. 18. Furthermore, it is sufficient if the program supplied to the information processing apparatus 1000 is stored in a rewritable temporary storage memory 1200 or the nonvolatile storage device 1300 such as a hard disk.

The program may be recorded (stored) in a computer readable non-transitory storage medium and may be supplied to the information processing apparatus 1000. Fig. 20 is a block diagram illustrating a configuration of a storage medium 1400 which is a computer readable non-transitory storage medium. That is, the above-described each exemplary embodiment includes an exemplary embodiment of the storage medium 1400 that stores the program executed by the CPU 1100.

While the present invention has been described with reference to the exemplary embodiments, the present invention is not limited to the aforementioned exemplary embodiments. In the configurations and details of the present invention, various changes understood by those of ordinary skill in the art can be made therein without departing from the scope of the present invention.

This application claims priority based on Japanese Patent Application No. 2014-022544 filed on February 7, 2014, the entire disclosures of which are incorporated herein.

### Industrial Applicability

The present invention can be used in all power storage systems having a battery connection configuration of a serial connection and can be applied to home, commercial, and industrial power storage systems, vehicle battery modules and the like.

### Reference Signs List

- 1: voltage difference correction unit
- 2: determination unit
- 3: control unit
- 4: calculation unit
- 5: monitoring unit
- 6: timer
- 7: battery module
- 8: first correction unit
- 9: second correction unit
- 10: storage unit
- 11: charge/discharge unit
- 12: BMU board
- 13: balance board
- A: terminal
- B: terminal
- C: terminal
- D: switching terminal
- E: terminal
- 21: cell
- 22: cell
- 24: cell
- 31: balance circuit
- 32: balance circuit
- 34: balance circuit
- 100: power storage system
- 1000: information processing apparatus
- 1100: CPU
- 1200: temporary storage memory
- 1300: storage device
- 1400: storage medium

## Claims

1. A voltage difference correction device comprising:
a determination means for selecting at least one of a first correction means and a second correction means based on a magnitude of a voltage difference outputted by a voltage difference detection means that detects a voltage difference among a plurality of cells in a power storage system at a predetermined time interval; and
a control means for driving and controlling the first correction means or the second correction means selected by the determination means in such a manner that the voltage difference is reduced.

2. The voltage difference correction device according to claim 1, wherein a rated current of the second correction means is larger than a rated current of the first correction means.

3. The voltage difference correction device according to claim 2, wherein
the voltage difference is a difference between a minimum cell voltage of cell voltages of the plurality of cells and each cell voltage.

4. The voltage difference correction device according to any one of claims 1 to 3, wherein the control means decides a time interval of voltage detection based on the magnitude of the voltage difference and outputs an instruction for subsequently detecting a voltage difference at the time interval to the voltage difference detection means.

5. The voltage difference correction device according to claim 3, wherein, when a magnitude of the minimum cell voltage exists in a flat region of battery discharge characteristics, the determination means selects the second correction means.

6. The voltage difference correction device according to any one of Claims 1 to 5, wherein the control means drives the second correction means for a predetermines time and sets a time interval of voltage difference detection.

7. The voltage difference correction device according to any one of claims 1 to 6, wherein, when the voltage difference is equal to or more than a predetermined threshold value, the selection means stops the selection and the control means does not drive all the first correction means and the second correction means.

8. The voltage difference correction device according to claim 5,
wherein the control means outputs a trigger signal for an alarm in response to the magnitude of the voltage difference.

9. A non-transitory computer readable medium stores a voltage difference correction program causing a computer to execute:
a determination process of selecting at least one of a first correction means and a second correction means based on a magnitude of a voltage difference outputted by a voltage difference detection means that detects a voltage difference among a plurality of cells in a power storage system at a predetermined time interval; and
a control process of driving the first correction unit or the second correction unit selected by the determination unit in such a manner that the voltage difference is reduced.

10. A voltage difference correction method, comprising:
selecting, by a computer, at least one of a first correction unit and a second correction unit based on a magnitude of a voltage difference outputted by a voltage difference detection unit that detects a voltage difference among a plurality of cells provided in a power storage system at a predetermined time interval; and
driving, by the computer, the selected first correction unit or second correction unit in such a manner that the voltage difference is reduced.
